(19) Europäisches Patentamt / European Patent Office / Office européen des brevets

(11) **EP 3 738 495 B1**

(12) **EUROPEAN PATENT SPECIFICATION**

(45) Date of publication and mention
of the grant of the patent:
**07.02.2024 Bulletin 2024/06**

(21) Application number: **18900386.6**

(22) Date of filing: **20.12.2018**

(51) International Patent Classification (IPC):
*A47L 9/28* (2006.01)      *A47L 11/40* (2006.01)
*B25J 9/16* (2006.01)      *B25J 19/02* (2006.01)
*G05D 1/02* (2020.01)

(52) Cooperative Patent Classification (CPC):
**A47L 9/2852; A47L 9/009; G05D 1/0246;**
**G05D 1/0274; A47L 2201/04**

(86) International application number:
**PCT/KR2018/016348**

(87) International publication number:
**WO 2019/139273 (18.07.2019 Gazette 2019/29)**

(54) **ROBOTIC VACUUM CLEANER AND CONTROL METHOD THEREFOR**

ROBOTISCHER STAUBSAUGER UND STEUERUNGSVERFAHREN DAFÜR

ROBOT ASPIRATEUR ET PROCÉDÉ DE COMMANDE ASSOCIÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.01.2018 KR 20180002904**

(43) Date of publication of application:
**18.11.2020 Bulletin 2020/47**

(60) Divisional application:
**23210317.6 / 4 300 249**

(73) Proprietor: **LG Electronics Inc.**
**07336 SEOUL (KR)**

(72) Inventors:
• **SHIN, Kicheol**
  **Seoul 08592 (KR)**

• **KIM, Ingyu**
  **Seoul 08592 (KR)**

(74) Representative: **Ter Meer Steinmeister & Partner**
**Patentanwälte mbB**
**Nymphenburger Straße 4**
**80335 München (DE)**

(56) References cited:
**EP-A1- 3 209 185         GB-A- 2 278 937**
**KR-A- 20140 000 811     KR-A- 20150 057 959**
**KR-A- 20150 065 134     KR-A- 20160 048 492**
**KR-B1- 101 816 131       US-A1- 2005 021 178**
**US-A1- 2009 048 727**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

# Description

[Technical Field]

The present disclosure relates to a robot cleaner and a method of controlling the same.

[Background Art]

Generally, a cleaner refers to a household appliance for sucking in and removing foreign materials on the floor. Among cleaners, a cleaner capable of automatically performing cleaning is referred to as a robot cleaner. The robot cleaner performs cleaning by sucking in foreign materials on the floor while moving by driving force of a motor driven by a battery. In addition, the robot cleaner includes an obstacle sensor to avoid obstacles while traveling and thus performs cleaning while autonomously traveling.

The robot cleaner needs to create a cleaning map and determine cleaning areas such as an area where cleaning has been completed and an area where cleaning has not been completed in the created cleaning map, in order to clean all areas while autonomously traveling.

Korean Patent Application Publication No. 10-2011-0053767 (publication date: May 24, 2011) discloses a robot cleaner.

The robot cleaner includes a traveling unit for enabling traveling in a cleaning area when a traveling mode command is input, a detector for detecting an object located in the cleaning area during traveling according to the traveling mode command, and a controller for creating a cleaning map for the cleaning area based on location information of the obstacle when the detected object is an obstacle and controlling cleaning operation based on the created cleaning map when the cleaning mode command is input.

Meanwhile, the robot cleaner may not avoid the detected obstacle and may stop by the obstacle, in a process of creating the cleaning map.

In this case, the robot cleaner may perform an escaping algorithm for escaping from an area where the robot cleaner has stopped by the obstacle. The escaping algorithm may be, for example, a series of operation rules for escaping from a point where the cleaner has stopped, such as changing of a traveling direction, forward traveling after backward traveling, etc.

When the robot cleaner escapes from the area where the robot cleaner has stopped by the escaping algorithm, the robot cleaner may register the point on the cleaning map as an obstacle.

Meanwhile, when the robot cleaner does not escape from the point by the escaping algorithm, a jungle may occur in the cleaning map created by the robot cleaner and thus an incorrect obstacle registration problem in which one obstacle is registered several times may occur.

For example, since the jungle occurs in the cleaning map, a cleanable area may be determined as a non-cleanable area. Accordingly, reliability of the cleaning map may be reduced and thus cleaning efficiency of the robot cleaner may not meet the expectations of a user.

US 2009/048727 A1 discloses a robot cleaner that is capable of reflecting an obstacle sensed by obstacle sensors on a local map and a control method and medium of the same. The robot cleaner includes an obstacle sensor to sense an obstacle, a memory to store a local map, and a control unit to calculate an obstacle position using the obstacle sensor and to reflect the obstacle position around the robot cleaner on the local map.

[Invention]

[Technical Problem]

An object of the present disclosure devised to solve the problem lies in a robot cleaner capable of improving cleaning efficiency by improving reliability of a cleaning map, and a method of controlling the same.

Another object of embodiments is to provide a robot cleaner capable of improving traveling performance by autonomously determining whether a detected obstacle is avoidable, and a method of controlling the same.

[Technical Solution]

One or more objects of the present technique are achieved by the invention set out by the features of the independent claim(s).

According to an aspect, a robot cleaner includes a main body including a driving unit for movement, an obstacle detection sensor provided in the main body to detect an obstacle, an angle measurement sensor configured to acquire angle information of the main body, a storage unit configured to store a cleaning map created based on a danger area including an area where an obstacle is located, and a control unit configured to perform cleaning such that the main body travels while avoiding the danger area created on the cleaning map, wherein the control unit is configured to determine whether the main body is able to travel with respect to the obstacle, based on the angle information of the main body, and set an area including the obstacle on the cleaning area as the danger area, upon determining that the obstacle restricts traveling of the main body.

The danger area may include a surrounding area of the area where the obstacle is located.

The angle measurement sensor may measure an angle of the main body in a traveling direction and an angle of the main body in a direction crossing the traveling direction.

The control unit may recognize an angle level of the main body relative to the obstacle based on the two angles measured by the angle measurement sensor.

The control unit may calculate a distance between the main body and the obstacle based on the two angles measured by the angle measurement sensor, and recognize the angle level of the main body relative to the obstacle using the calculated distance between the main body and the obstacle.

The distance between the main body and the obstacle may be inversely proportional to the angle of the main body relative to the obstacle.

The control unit may set an area including the obstacle on the cleaning area as the danger area, when the distance between the main body and the obstacle is less than a set value pre-stored in the storage unit.

The control unit may set an area including the obstacle on the cleaning map as a first travelable area able to be overcome by normal traveling, when the distance between the main body and the obstacle is greater than a first set value.

The control unit may set an area including the obstacle on the cleaning map as a second travelable area able to be overcome by rotation traveling of the main body, when the distance between the main body and the obstacle is in a range from the first set value to a second set value less than the first set value.

The control unit may acquire direction information of the obstacle relative to the main body based on angle information of each direction measured by the angle measurement sensor.

According to another aspect, a method of controlling a robot cleaner includes creating a cleaning map of an area specified while a main body travels, detecting an obstacle in a process of creating the cleaning map, the main body traveling toward the obstacle during a set time and then stopping, acquiring angle information of the main body relative to the obstacle, determining whether an area including the obstacle is a danger area based on the angle information, and, by a control unit, storing the danger area in a storage unit and changing a traveling direction of the main body to avoid the danger area, upon determining that an area where the detected obstacle is located is the danger area.

The acquiring of the angle information of the main body relative to the obstacle may include, by an angle measurement unit, measuring a first angle of the main body in a traveling direction and a second angle of the main body in a direction crossing the traveling direction, calculating a distance between the obstacle and the main body based on the measured first and second angles, and determining an angle level of the main body by comparing the measured distance with a set value.

When the distance between the obstacle and the main body is greater than a first set value, an area including the obstacle may be set on the cleaning area as a first travelable area able to be overcome by normal traveling.

When the distance between the obstacle and the main body is in a range from the first set value to a second set value less than the first set value, the control unit may set the area including the obstacle on the cleaning area as a second travelable area able to be overcome by rotation traveling.

When the distance between the obstacle and the main body is less than the second set value, the control unit may set an area including the obstacle on the cleaning area as the danger area.

The method may further include, by an angle measurement unit, acquiring location information of the obstacle using an angle of the main body in a traveling direction and an angle of the main body in a direction crossing the traveling direction, and storing the danger area on the cleaning map based on the acquired location information of the obstacle.

[Effect of the Invention]

According to embodiments, it is possible to determine whether a robot cleaner can travel with respect to a detected obstacle using angle information of a main body generated by an obstacle. Accordingly, it is possible to improve reliability of a cleaning map, thereby improving cleaning efficiency.

In particular, the robot cleaner can check the angle level of the main boy relative to the obstacle using a principle in which a distance between the main body and the obstacle is inversely proportional to the angle of the main body of the robot cleaner relative to the obstacle, without a separate detection sensor. Accordingly, it is possible to improve obstacle recognition performance by simplifying the configuration of the robot cleaner.

In addition, the robot cleaner may recognize a detected obstacle as any one of an obstacle which may be overcome by normal traveling, an obstacle which may be overcome by rotation, and an obstacle which may not be overcome, based on the distance between the main body and the obstacle. Accordingly, it is possible to further improve cleaning performance of the robot cleaner.

[Description of Drawings]

FIG. 1 is a perspective view of a robot cleaner according to an embodiment of the present disclosure.

FIG. 2 is a block diagram showing the control configuration of a robot cleaner according to an embodiment of the present disclosure.

FIG. 3 is a view showing an example of an indoor space for performing cleaning according to an embodiment of the present disclosure.

FIG. 4 is a view illustrating a cleaning map created by a method of controlling a robot cleaner of FIG. 3.

FIG. 5 is a view schematically showing a lower obstacle and a robot in order to explain a process of recognizing the lower obstacle according to an embodiment of the present disclosure.

FIG. 6 is a view illustrating a state in which a lower obstacle is set as a danger area on a cleaning map according to an embodiment of the present disclosure.

FIG. 7 is a view schematically showing a robot cleaner avoiding a danger area according to an embodiment of the present disclosure.

FIG. 8 is a flowchart illustrating a method of controlling a robot cleaner according to an embodiment of the present disclosure.

[Best Mode]

Hereinafter, some embodiments of the present disclosure will be described in detail through exemplary drawings. It should be noted that, in adding reference numerals to the components of each drawing, the same components have the same reference numerals as possible, even if they are shown on different drawings. In addition, in describing embodiments of the present disclosure, if it is determined that the detailed description of a related known function or construction renders the scope of the present disclosure unnecessarily ambiguous, the detailed description thereof will be omitted.

It will be understood that, although the terms first, second, A, B, (a), (b), etc. may be used herein to describe various elements of the present disclosure, these terms are only used to distinguish one element from another element and essential, order, or sequence of corresponding elements are not limited by these terms. It will be understood that when one element is referred to as "being connected to", "being coupled to", or "accessing" another element, one element may "be connected to", "be coupled to", or "access" another element via a further element although one element may be directly connected to or may directly access another element.

[Configuration of robot cleaner]

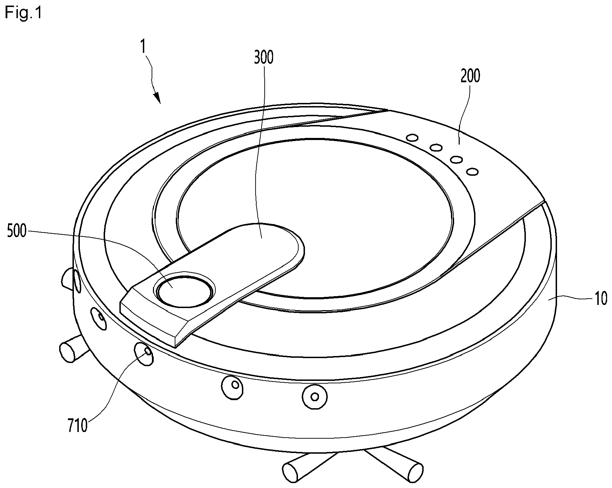

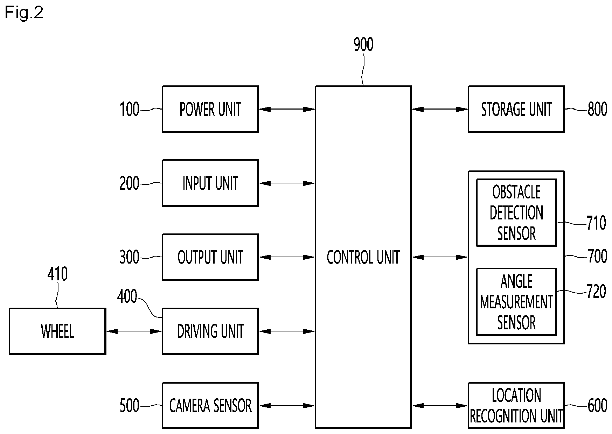

FIG. 1 is a perspective view of a robot cleaner according to an embodiment of the present disclosure, and FIG. 2 is a block diagram showing the control configuration of a robot cleaner according to an embodiment of the present disclosure.

Referring to FIGS. 1 and 2, the robot cleaner 1 according to the embodiment of the present disclosure may include a main body 10 forming appearance thereof.

In the main body 10, a suction unit (not shown) for sucking force may be provided. In the lower side of the main body 10, a suction port (not shown) for sucking in air including dust may be provided.

The robot cleaner 1 may include a power unit 100 provided with a rechargeable power supply to supply power to the robot cleaner.

The power unit 100 supplies power such that the robot cleaner 1 moves and performs cleaning. In addition, when power is insufficient, the robot cleaner 1 may be docked on a charging stand (not shown) provided separately. In addition, the power supply of the power unit 100 may be charged by receiving charging current from the charging stand.

The robot cleaner 1 may further include an input unit 200 for receiving a control command from the outside or receiving a command for outputting one or more pieces of information.

The input unit 200 may include one or more input buttons. In addition, in order for the user to easily press the input buttons, the input buttons may be provided on the upper surface of the main body 10. In addition, a user may input a command for control of the robot cleaner 1, such as a cleaning map, a cleaning area, location information, obstacle information and a cleaning mode through the input buttons.

Meanwhile, a separate terminal (not shown) connected to the robot cleaner 1 wirelessly or by wire may be further provided, and the user may input a control command to the robot cleaner 1 using the terminal.

The robot cleaner 1 may further include an output unit 300 for displaying state information or displaying output information of the command input through the input unit 200.

The output unit 300 may be any one of a light emitting diode (LED), a liquid crystal display (LCD), a plasma display panel and an organic light emitting diode (OLED) to output text and pictures. In addition, the output unit 300 may include a unit for outputting sound, such as a beeper or a speaker.

The robot cleaner 1 may include a driving unit 400 for movement of the robot cleaner 1. The driving unit 400 may be provided in the main body 10.

The driving unit 400 may include one or more wheels 410 and a motor (not shown) for driving the one or more wheels 410 in the main body 10.

In the present disclosure, for convenience of description, it is assumed that the main body 10 includes a pair of wheels 410.

The motor may be controlled by a control unit 900 which will be described. According to control of the control unit 900, the robot cleaner 1 may move forward or backward or turn left or right.

The robot cleaner 1 may further include a storage unit 800 in which a variety of information such as state information, location information, a cleaning mode, etc. are stored.

The storage unit 800 may store a predetermined cleaning map. The cleaning map may include a danger area including an area where an obstacle is located and a surrounding area of the area where the obstacle is located. The danger area will be described below.

A direction will be defined.

When the driving unit 400 is driven in a forward direction, the robot cleaner 1 may move forward. On the other hand, when the driving unit 400 is driven in a reverse direction, the robot cleaner 1 may move backward.

In addition, a direction in which one surface of the robot cleaner 1 facing a ceiling surface is located is an upper direction of the robot cleaner 1 and a direction in which one surface of the robot cleaner 1 facing a floor surface is located is a lower direction of the robot cleaner 1.

The robot cleaner 1 may include a camera sensor 500 for acquiring external image information.

The camera sensor 500 may be provided on the upper surface of the robot cleaner 1 to acquire image information of the upper side of the robot cleaner 1. In addition, the camera sensor 500 may be further provided in the lower surface of the robot cleaner 1. The camera sensor provided in the lower surface of the robot cleaner 1 may acquire image information of the lower side of the robot cleaner 1.

The robot cleaner 1 may include a location recognition unit 600 for recognizing the current location of the robot cleaner 1 within the cleaning area.

The location recognition unit 600 may include, for example, a speed detection sensor (not shown) for acquiring the current speed information of the robot cleaner 1 and a gyro sensor (not shown) for acquiring direction change information of the robot cleaner 1.

In addition, based on the information acquired by the sensors and the information acquired by the camera sensor 500, the current location of the robot cleaner 1 may be determined.

The robot cleaner 1 may further include an obstacle detection unit 700 for detecting an obstacle.

The obstacle detection unit 700 may detect an obstacle which is moving in the cleaning area or is located around the robot cleaner. The obstacle detection unit 700 may include a plurality of sensors. In addition, each sensor may have unique detection characteristics.

The plurality of detection sensors may include an obstacle detection sensor 710 for measuring the height or depth of an obstacle located at the front side thereof and an angle measurement sensor 720 for measuring the currently tilted state of the robot cleaner 1.

The obstacle detection sensor 710 may be located at the lower surface of the main body 10 in order to measure the height or depth of the lower surface of the main body 10. In addition, in order to measure the height or depth of an object located in the traveling direction of the robot cleaner 1, the obstacle detection sensor 710 may be further provided at the front side of the main body 10, for example. The obstacle detection sensor 710 may include a laser sensor, an ultrasonic sensor, etc., for example.

The angle measurement sensor 720 measures the coordinate value of the main body 10 based on an x- and y-axis coordinate system when a lower obstacle is recognized by the obstacle detection sensor 710.

Specifically, the traveling direction of the main body 10 may be understood as the Y-axis. In addition, the left-and-right direction of the traveling direction of the main body 10 may be understood as the X-axis. The angle measurement sensor 720 may include at least one of an acceleration sensor or a gyro sensor, for example.

Information on the x- and y-axes measured in the angle measurement sensor 720 may be transmitted to the control unit 900. The control unit 900 may calculate the tilted degree and direction of the main body 10 using the information on the x- and y-axes. Calculation of the tilted degree and direction of the main body 10 by the control unit 900 will be described below in detail.

The robot cleaner 1 may further include the control unit 900 for searching for the cleaning area of an indoor space to create a cleaning map and controlling the modules (the power unit 100, the input unit 200, the output unit 300, the driving unit 400, the camera sensor 500, the location recognition unit 600, the obstacle detection unit 700, and the storage unit 800) provided in the main body 10 to perform cleaning.

The cleaning map created by the control unit 900 may be stored in the storage unit 800. In addition, the control unit 900 may search for or clean the cleaning area according to the command input through the input unit 200, based on the cleaning map stored in the storage unit 800. At this time, while the robot cleaner 1 travels or performs cleaning, the control unit 900 may create the cleaning map using wall search or cell division.

In the present disclosure, generating the cleaning map using wall search or cell division is a well-known technique and thus a detailed description will be omitted.

The control unit 900 may grasp the current location of the robot cleaner 1 on the cleaning map by referring to the information stored in the storage unit 800, and grasp a cleaning completion area and a cleaning non-completion area based on the movement path of the robot cleaner 1.

In addition, the control unit 900 may control the obstacle detection unit 700 to determine whether a danger area is present in a cleaning area where the robot cleaner is traveling. The danger area may mean an area where an obstacle stopping traveling of the robot cleaner 1 is located.

For example, the robot cleaner 1 may stay during a set time within a set range by the obstacle detected by the obstacle detection unit 700. In this case, the control unit 900 may store an area where an obstacle is located in the storage unit 800 as the danger area. Even if an obstacle is detected by the obstacle detection unit 700, the robot cleaner 1 may escape from the area where the obstacle is detected, without changing the traveling direction.

In another example, the robot cleaner 1 may stay during a set time within the set range, even if the obstacle is not detected by the obstacle detection unit 700. In this case, movement of the robot cleaner 1 may be restricted by an obstacle which is not detected by the obstacle detection unit 700.

Accordingly, the control unit 900 may store the area where the robot cleaner stay during the set time within the set range in the storage unit 800 as the danger area. Accordingly, it is possible to more accurately determine the danger area where the obstacle is located.

Accordingly, when the danger area is detected while the robot cleaner 1 travels, the control unit 900 may change the traveling direction of the robot cleaner 1. Therefore, it is possible to reduce a phenomenon wherein the robot cleaner 1 stops by the obstacle.

Meanwhile, as described above, the robot cleaner 1 may further include a timer (not shown) capable of measuring a time, in order to determine whether the robot cleaner 1 is normal or abnormal by measuring a time.

The control unit 900 may store the detected danger area set on the cleaning map in the storage unit 800.

[Cleaning map on which danger area is set by the control unit]

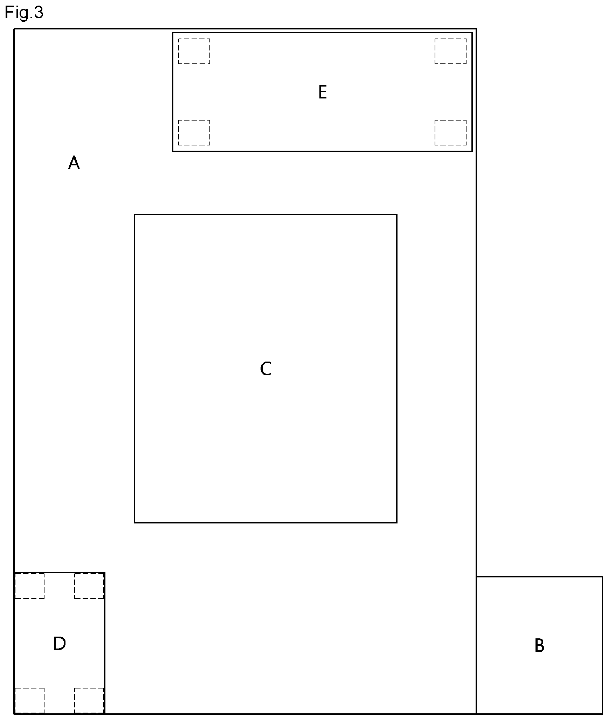

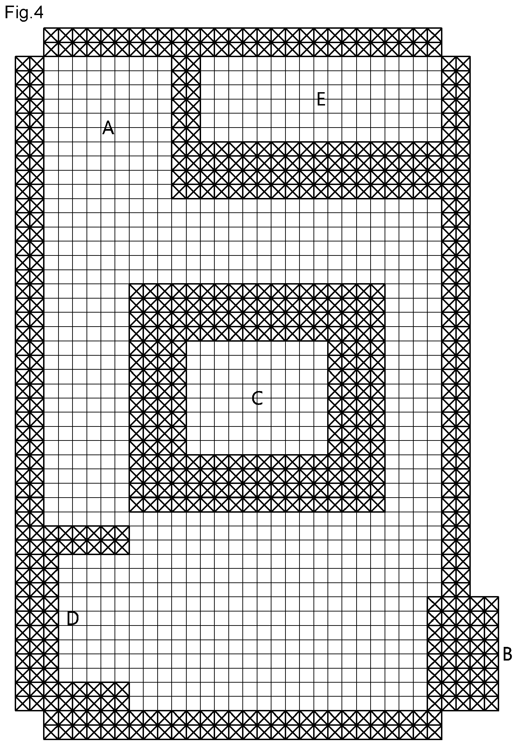

FIG. 3 is a view showing an example of an indoor space for performing cleaning according to an embodiment of the present disclosure, and FIG. 4 is a view illustrating a cleaning map created by the control unit of the robot cleaner of FIG. 3.

Referring to FIGS. 3 and 4, the robot cleaner 1 may create the cleaning map shown in FIG. 4 while traveling in the indoor space A shown in FIG. 3.

For example, the control unit 900 may divide the cleaning map into a plurality of blocks. In addition, the control unit 900 may create the cleaning map, by dividing the indoor space A into an area where cleaning is possible and an area where cleaning is restricted, during traveling. The number or size of blocks may be set by a user. The size of the block may be set to, for example, 10 cm horizontally and 10 cm vertically.

Meanwhile, in the detailed description of the indoor space A, reference numeral B may mean a separate space different from the indoor space A in terms of height.

The height of the indoor space A may be greater than that of the space denoted by reference numeral B. Reference numeral B may mean a front entrance, for example.

In addition, reference numeral C may mean an obstacle which is placed on the floor and on which the robot cleaner 1 travels. For example, reference numeral C may mean a carpet.

Reference numeral D may mean an obstacle having a lower space in which the robot cleaner 1 may travel. Reference numeral D may mean a table, for example.

In addition, reference numeral E may mean an obstacle having a lower space which the robot cleaner 1 cannot enter. For example, reference numeral E may mean a bed.

Meanwhile, while the robot cleaner 1 travels, the control unit 900 may determine whether an obstacle is detected through the obstacle detection unit 700. The control unit 900 may detect the obstacle using the obstacle detection sensor 710. When the height of the obstacle in the traveling direction of the robot cleaner 1 is greater than that of the floor, the control unit 900 may detect that the obstacle is located ahead of the robot cleaner 1.

The obstacle may include a wall forming the outer periphery of the indoor space A, a carpet C, a table D and a bead E, for example.

Alternatively, when the obstacle in the traveling direction of the robot cleaner 1 is lower than the floor on which the robot cleaner is traveling, the control unit 900 may detect that the obstacle is located ahead of the robot cleaner 1. The obstacle may be a cliff formed by a step difference between the indoor space A and the front entrance B.

Upon determining that entry into an area where the obstacle is detected is impossible, the control unit 900 may set and register (or store) the area where the obstacle is detected in the storage unit 800 as the danger area. That is, the danger area set by the control unit 900 may be set on the cleaning map and stored in the storage unit 800.

Accordingly, when the robot cleaner 1 travels toward an area including the danger area while performing cleaning, the robot cleaner 1 may travel to avoid the danger area by changing the direction thereof.

Hereinafter, a method of, by the control unit 900, recognizing an obstacle based on angle information of the main body 10 will be described.

[Method of recognizing obstacle of robot cleaner]

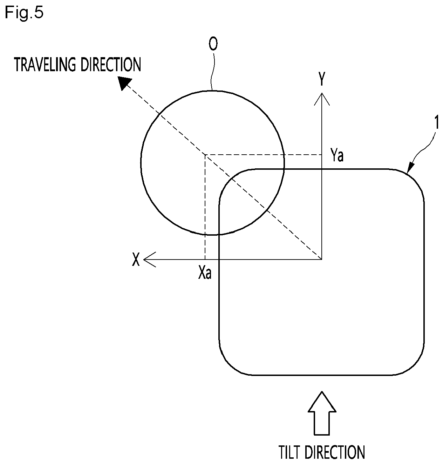

FIG. 5 is a view schematically showing a lower obstacle and a robot cleaner in order to explain a method of recognizing the lower obstacle according to an embodiment of the present disclosure.

Referring to FIG. 5, the control unit 900 may recognize an obstacle at the front or lateral side of the center of the main body 10 through the obstacle detection unit 700.

When the obstacle located at the front or lateral side is recognized by the obstacle detection unit 700, the control unit 900 may measure the angle value of each of the X- and Y- axes using the angle measurement sensor 720.

In addition, the tilted degree of the main body 10 by the obstacle and the direction of the obstacle may be calculated through a calculation process using Equations 1 and 2 below.

<Method of measuring angle level of main body 10 by obstacle>

First, the control unit 900 may calculate a distance between the main body 10 and the obstacle through Equation 1 below.

Equation 1

$$S = K * \frac{1}{\sqrt{Xa^2 + Ya^2}} + B$$

In Equation 1, a symbol "S" may be understood as information on a distance between a point which is estimated as the center of the obstacle O and the center of the main body 10. In addition, symbol "Xa" may be understood as the X-axis angle value of the main body 10 measured by the angle measurement sensor 720. In addition, symbol "Ya" may be understood as the Y-axis angle value of the main body 10 measured by the angle measurement sensor 720. In addition, symbol "B" may be understood as a physical constant set by a designer in order to reduce error through experimentation.

According to Equation 1, using the X- and Y-axis angle values occurring while the main body 10 travels, the control unit 900 may acquire information on a distance between the center of the obstacle O and the center of the main body 10. The control unit 900 may determine whether the main body 10 is able to overcome the obstacle using information on the distance between the center of the main body 10 and the center of the obstacle O.

Specifically, the distance between the center of the main body 10 and the center of the obstacle O may be inversely proportional to the angle level of the main body 10. For example, as the distance between the center of the main body 10 and the center of the obstacle O increases, an obstacle O having a small angle level (or a gentle angle) may be understood as being located. As the angle level of the obstacle O decreases, it is easier for the main body 10 to overcome the obstacle.

Accordingly, when the distance between the center of the main body 10 and the center of the obstacle O is recognized to be equal to or greater than a set value, the control unit 100 may recognize the obstacle O as an overcomeable obstacle. In addition, an area where the overcomeable obstacle is located may be stored on the cleaning map.

On the contrary, as the distance between the center of the main body 10 and the center of the obstacle O decreases, an obstacle O having a large angle level (or a steep angle) may be understood as being located. As the angle level of the obstacle O increases, it is harder for the main body 10 to overcome the obstacle.

Accordingly, when the distance between the center of the main body 10 and the center of the obstacle O is recognized as being less than the set value, the control unit 100 may recognize the obstacle O as a unovercomeable obstacle. In addition, an area where the unovercomeable obstacle is located may be set as a danger area and set on the cleaning map.

<Method of acquiring location information of obstacle in traveling direction of main body of robot cleaner>

Next, the control unit 900 may acquire the location information (or the direction information) of the obstacle in the traveling direction of the main body 10 through Equation 2 below.

Equation 2

$$\theta = \arcsin \frac{Xa}{\sqrt{Xa^2 + Ya^2}}$$

In Equation 2, symbol "θ" may be understood as direction information (or a degree) of the obstacle relative to the main body 10. In addition, symbol "Xa" may be understood as the X-axis angle value of the main body 10 measured by the angle measurement sensor 720. In addition, symbol "Ya" may be understood as the Y-axis angle value of the main body 10 measured by the angle measurement sensor 720.

Through Equation 2, the control unit 900 may recognize the direction information of the obstacle based on the center of the main body 10.

<Information on obstacle set on cleaning map>

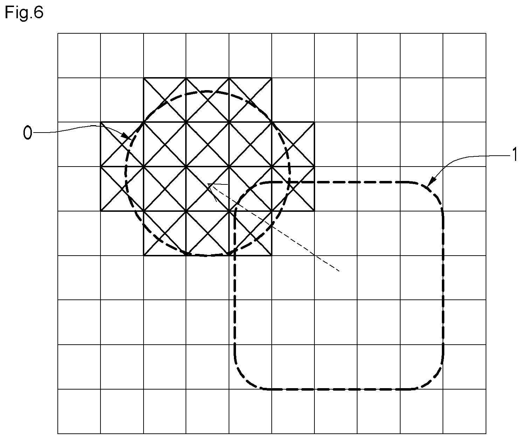

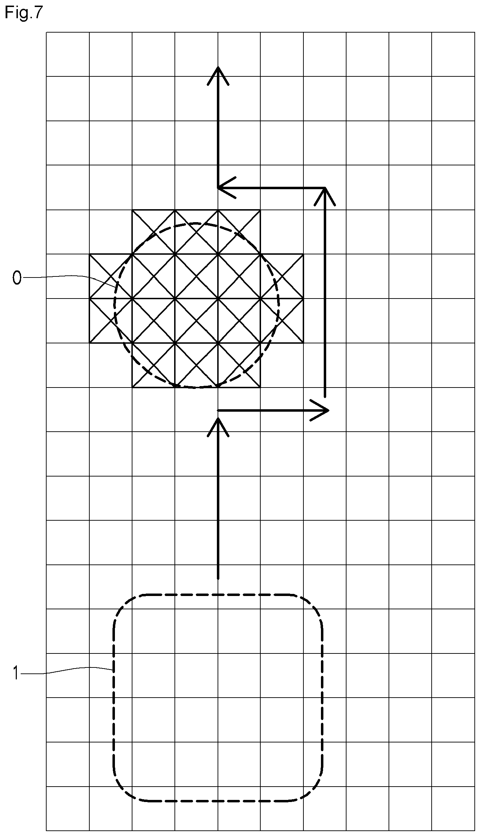

FIG. 6 is a view illustrating a state in which an obstacle, entry into which is recognized as being impossible, is set as a danger area on a cleaning map according to an embodiment of the present disclosure, and FIG. 7 is a view schematically showing a robot cleaner avoiding a danger area according to an embodiment of the present disclosure.

Referring to FIG. 6, when an obstacle is recognized by the obstacle detection sensor 710, the control unit 900 may control the driving unit 400 to drive the main body 10 toward the obstacle during a set time and then stop the main body.

In other words, by control of the driving unit 400 of the control unit 900, the main body 10 may climb the obstacle having a predetermined height during the set time and then stop. Alternatively, by control of the driving unit 400 of the control unit 900, the main body 10 may travel with respect to an obstacle having a predetermined depth during the set time and then stop.

The control unit 900 may acquire information on a distance between the main body 10 and the obstacle and direction information of the obstacle, after stopping the main body 10.

In addition, the control unit 900 may set any one of a danger area and a travelable area on the cleaning map based on the distance information and the direction information.

The danger area may be understood as an area with an obstacle which restricts traveling of the main body 10. The danger area may be set as an abnormal block on the cleaning map divided into a plurality of blocks. The abnormal block may be marked with "X" as shown in the figure. However, the mark of the abnormal block is not limited to a symbol "X" and languages and numerals available in the control unit 900 may be set.

The control unit 900 may set a location where the abnormal block will be set (direction in which the obstacle is calculated to be present) using the direction information. In addition, the control unit 900 may set a set number of abnormal blocks on the cleaning map based on the distance information (or angle information) calculated through Equation 1.

Accordingly, the danger area may be set on the cleaning map through setting of the abnormal block. The method of setting the abnormal block forming the danger area may be pre-stored in the storage unit 600. For example, when it is difficult for the main body 10 to overcome the obstacle detected through the obstacle detection sensor 710, the control unit 900 may set the abnormal blocks to be distributed in a radial form based on the center of the obstacle. At this time, the number of abnormal blocks forming the danger area may be predetermined.

In another example, the control unit 900 may set the number of abnormal blocks forming the danger area to be proportional to a distance between the center of the main body 10 and the center of the obstacle.

Meanwhile, the travelable area may be understood as an area where an obstacle which allows the main body 10 to travel. For example, the obstacle which allows the main body 10 to travel may include a threshold, a carpet, etc. The travelable area may be set as a normal block different from the abnormal block.

Referring to FIG. 7, while the main body 10 travels, the control unit 900 may monitor detection of the obstacle using the obstacle detection sensor 700. Specifically, the control unit 900 may detect an obstacle through the obstacle detection sensor 710 while traveling.

When the obstacle is detected by the obstacle detection sensor 710, the control unit 900 may determine whether an area where the obstacle is located corresponds to any one of the danger area, an unset area and the travelable area.

When the danger area is recognized, as shown in the figure, the control unit 900 may control the driving unit 400 such that the main body 10 travels to avoid the danger area.

Meanwhile, when the area where the obstacle is located is the unset area, the control unit may acquire information on the obstacle through Equations 1 and 2.

In addition, by comparing the information on the obstacle with the information stored in the storage unit 800, it is possible to determine whether the area where the obstacle is located is the danger area.

In addition, when the area where the obstacle is located is the travelable area, the control unit 900 may control the driving unit 400 such that the main body 10 travels without avoiding the obstacle.

[Method of calculating the danger area for lower obstacle according to measured angle]

Hereinafter, a method of detecting a lower obstacle of an indoor space while the robot cleaner 1 performs cleaning and setting the danger area based on the detected information will be described.

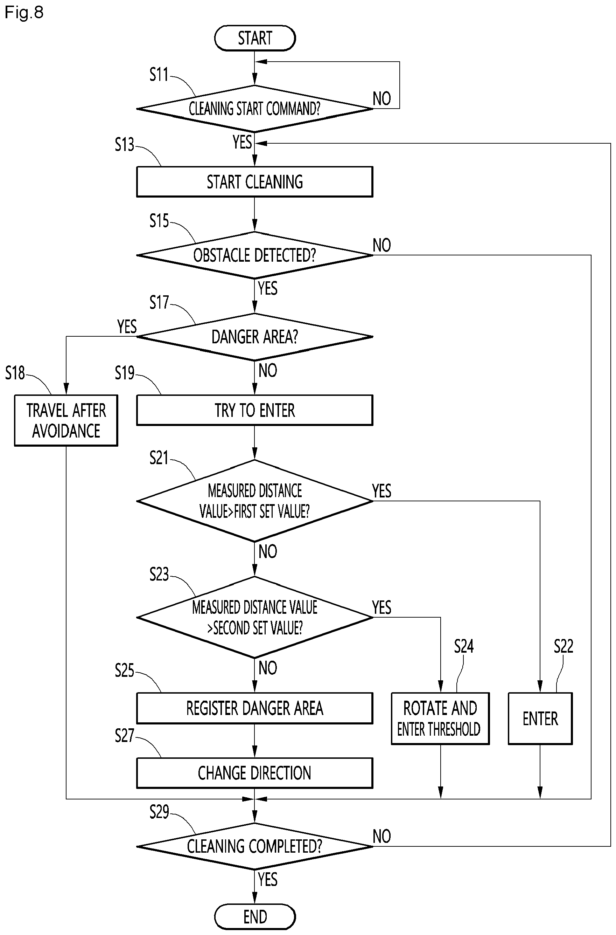

FIG. 8 is a flowchart illustrating a method of controlling a robot cleaner according to an embodiment of the present disclosure.

Referring to FIG. 8, the control unit 900 of the robot cleaner 1 may operate based on a control mode selected by the command of a user (S1 1). That is, the control unit 900 may control the driving unit 400 based on the command of the user input through the input unit 200.

The control mode may include, for example, a mode in which a cleaning map for cleaning is created, a mode in which a cleaning map is created while cleaning is performed, and a mode in which cleaning is performed based on a pre-created cleaning map.

However, in the present embodiment, for convenience of description, creation of the cleaning map while performing cleaning will be described.

The control unit 900 of the robot cleaner 1 may perform cleaning by a cleaning start command of the user (S13).

The control unit 900 may create the cleaning map having a plurality of blocks, as shown in FIG. 4. In addition, the control unit 900 may create the cleaning map divided into a cleanable area and a cleaning limitation area, while traveling in the indoor space A. The number or size of blocks may be set by the user.

While the robot cleaner 1 travels, the control unit 900 may determine whether the obstacle is detected through the obstacle detection unit 700 (S15).

The control unit 900 may detect the obstacle using height information or depth information measured by the obstacle detection sensor 710. When the height of an object located in the traveling direction of the robot cleaner 1 is higher than that of the floor or the depth of the object is lower than that of the floor, the control unit 900 may detect that the obstacle is located ahead of the robot cleaner 1.

The obstacle may include, for example, a wall forming the outer periphery of the indoor space A, a carpet C, a table D, a bed E and a front entrance B. The control unit 900 may control the driving unit 400 such that the main body 10 travels (or cleans) in a specified area while monitoring detection of the obstacle (S 15 to S29).

Meanwhile, when the obstacle is detected by the obstacle detection unit 700 while the main body travels in the specified area, the control unit 900 may determine whether the area where the obstacle is detected is any one of the travelable area, the danger area and the unset area.

The travelable area may be understood as an area where an obstacle which does not interrupt traveling of the main body 10 is located. The travelable area may be set as one or more normal blocks which may be determined by the control unit 900 as an area where cleaning may be performed. The travelable area will be described in detail below.

Meanwhile, the danger area may be understood as an area where an obstacle which interrupt traveling of the main body 10 is located. In other words, traveling of the main body 10 may be interrupted by the obstacle in the danger area.

Accordingly, the danger area may be an area where the main body 10 changes a direction thereof in order to continuously travel. The danger area is distinguished from the normal block and may be set as one or more abnormal blocks which may be determined such that the control unit 900 change the traveling direction of the main body 10. The abnormal block may be, for example, marked with "X" as shown in FIG. 4.

Upon determining that the area where the obstacle detected by the obstacle detection unit 700 is located is the danger area (S17), the control unit 900 may continuously travel to avoid the danger area (S18). The danger area may be pre-stored in the storage unit 800.

Meanwhile, when the area where the obstacle detected by the obstacle detection unit 700 is located is recognized as the unset area or the travelable area, the control unit 900 may control the driving unit 600 such that the main body tries to travel toward (or enter) the obstacle (S19).

When the area where the obstacle is located is recognized as the travelable area, the control unit 900 may control the driving unit 400 to perform traveling. Here, the travelable area may include a first travelable area and a second travelable area.

The first travelable area may be understood as an area where the main body 10 may overcome the obstacle through normal traveling of the driving unit 400.

In addition, the second travelable area may be understood as an area where an obstacle on which the main body 10 may travel is located, through rotation traveling of the driving unit 400.

Here, the rotation traveling may be understood as overcoming the obstacle while the robot cleaner 1 rotates based on the center of the main body 10.

In another example, when the second travelable area is recognized, the control unit 900 may control the driving unit 400 to move the main body 10 backward by a certain distance and move forward again. In this case, by acceleration of the main body 10, the robot cleaner 1 may overcome the obstacle.

Meanwhile, when the area where the obstacle detected by the obstacle detection unit 700 is located is the unset area, the control unit 900 may determine whether traveling is possible. The control unit 900 may acquire the current angle of the main body 10 and information on the area where the obstacle is located, using the angle measurement unit 720, in a process of entering the unset area.

Specifically, when the obstacle is detected, the control unit 900 may set the unset area as the danger area or the travelable area through calculation of Equations 1 and 2 based on information acquired by the angle measurement unit 720.

The control unit 900 may check the angle level of the main body 10 and determine whether the main body 10 may enter the obstacle (S21). The control unit 900 may acquire the current angle value of the main body 10 using the angle measurement sensor 720.

In addition, the control unit 900 may calculate a distance between the center of the main body 10 and the center of the obstacle, by applying the angle value to Equations 1 and 2 above.

The calculated distance between the center of the main body 10 and the center of the obstacle may be used to predict the tilt (or the angle) of the obstacle. For example, when the distance between the center of the main body 10 and the center of the obstacle is small, the tilt (angle) of the obstacle may be understood as being large. In another example, when the distance between the center of the main body 10 and the center of the obstacle is small, the tilt (angle) of the obstacle may be understood as being small.

Hereinafter, for convenience of description, the distance between the center of the main body 10 and the center of the obstacle calculated by the control unit 900 is referred to as a "measured distance value".

The control unit 900 may determine whether the main body 10 may travel with respect to the detected obstacle, by comparing the measured distance value with the first set distance value (the first set value) (S21).

When the measured distance value is equal to or greater than the first set value, the control unit 900 may control the driving unit 400 such that the main body 10 travels with respect to the obstacle (S22).

In addition, the control unit 900 may set the area including the obstacle on the cleaning map as the first travelable area. The cleaning map on which the first travelable area is set may be stored in the storage unit 800.

Accordingly, when the robot cleaner 1 travels next time, since the area including the obstacle is recognized as the first travelable area, the control unit 900 may perform traveling without the process of determining the danger area (S22).

Meanwhile, when the measured distance value is recognized as being less than the first set value, the control unit 900 may compare the measured distance value with a second set value less than the first set value (S23).

When the measured distance value is between the first set value and the second set value, the control unit 900 may drive the driving unit 400 such that the main body 10 performs rotation traveling to overcome the obstacle (S24).

Specifically, the control unit 900 may recognize the obstacle detected by the obstacle detection sensor 710 as an obstacle which may be overcome by rotation traveling of the main body 10.

The control unit 900 may overcome the obstacle by rotation traveling of the main body 10. The robot cleaner 10 may overcome the obstacle using rotation force. Here, rotation traveling of the main body 10 may be understood as rotation. In addition, the obstacle may be understood as a threshold, for example.

In addition, the control unit 900 may store the area where the obstacle is located in the storage unit 600 as the second travelable area where the main body may travel with respect to the obstacle through rotation traveling.

In other words, the control unit 900 may set the area where the obstacle is located on the cleaning map as the second travelable area. Accordingly, when the robot cleaner 1 travels next time, since the obstacle is recognized as the second travelable area, the obstacle may be overcome through rotation traveling without the process of determining the danger area.

Meanwhile, when the measured distance value is recognized as being less than the second set in step S23, the control unit 900 may store the area including the obstacle in the storage unit 600 as the danger area (S25).

Accordingly, when the robot cleaner 1 travels next time, since the area including the obstacle is recognized as the danger area, the control unit 900 may avoid the danger area without the process of determining the danger area.

The control unit 900 may repeatedly perform the process of steps S13 to S27 until cleaning is completed (S29).

According to the embodiment, it is possible to improve reliability of the cleaning map of the robot cleaner 1 and to improve cleaning efficiency.

In addition, the robot cleaner 1 may determine whether the robot cleaner may travel with respect to the detected obstacle using the angle information of the main body 10 generated by the obstacle.

In particular, the robot cleaner 1 may check the angle level of the main body 10 relative to the obstacle using the principle that the distance between the main body 10 and the obstacle is inversely proportional to the angle of the main body 10, without a separate detection sensor. Accordingly, it is possible to simplify the configuration of the robot cleaner 1 and to improve obstacle recognition performance.

In addition, the robot cleaner 1 may recognize an obstacle detected based on the distance between the main body 10 and the obstacle as any one of an obstacle which may be overcome by normal traveling, an obstacle which may be overcome by rotation traveling and an obstacle which may not be overcome. Accordingly, it is possible to further improve cleaning performance of the robot cleaner 1.

## Claims

1.  A robot cleaner (1) comprising:

    a main body (10) including a driving unit (400) for movement;
    an obstacle detection sensor (710) provided in the main body (10) to detect an obstacle;
    an angle measurement sensor (720) configured to measure an angle of the main body (10) in a traveling direction and an angle of the main body (10) in a direction crossing the traveling direction;
    a storage unit (800) configured to store a cleaning map created based on a danger area including an area where an obstacle is located; and
    a control unit (900) configured to perform cleaning such that the main body (10) travels while avoiding the danger area created on the cleaning map,

    **characterized in that** the control unit (900) is configured to:

    calculate a distance between the main body (10) and the obstacle based on the two angles measured by the angle measurement sensor (720),
    recognize an angle level of the main body (10) relative to the obstacle using the calculated distance between the main body (10) and the obstacle;
    determine whether the main body (10) is able to travel with respect to the obstacle, based on the angle level of the main body (10); and
    set an area including the obstacle on the cleaning area as the danger area, upon determining that the obstacle restricts traveling of the main body (10).

2.  The robot cleaner (1) of claim 1, wherein the danger area comprises a surrounding area of the area where the obstacle is located.

3.  The robot cleaner (1) of claim 1, wherein the distance between the main body (10) and the obstacle is inversely proportional to the angle of the main body (10) relative to the obstacle.

4.  The robot cleaner (1) of any one of claims 1 to 3, wherein the control unit (900) sets an area including the obstacle on the cleaning area as the danger area, when the distance between the main body (10) and the obstacle is less than a set value pre-stored in the storage unit (800).

5. The robot cleaner (1) of any one of claims 1 to 4, wherein the control unit (900) sets an area including the obstacle on the cleaning map as a first travelable area able to be overcome by normal traveling, when the distance between the main body (10) and the obstacle is greater than a first set value.

6. The robot cleaner (1) of claim 5, wherein the control unit (900) sets an area including the obstacle on the cleaning map as a second travelable area able to be overcome by rotation traveling of the main body (10), when the distance between the main body (10) and the obstacle is in a range from the first set value to a second set value less than the first set value.

7. The robot cleaner (1) of any one of claims 1 to 6, wherein the control unit (900) acquires direction information of the obstacle relative to the main body (10) based on angle information of each direction measured by the angle measurement sensor (720).

8. A method of controlling a robot cleaner (1), the method comprising:

creating a cleaning map of an area specified while a main body (10) travels (S13); detecting an obstacle in a process of creating the cleaning map (S15); the main body (10) traveling toward the obstacle during a set time and then stopping (S19); and by an angle measurement unit, measuring a first angle of the main body (10) in a traveling direction and a second angle of the main body (10) in a direction crossing the traveling direction, and calculating a distance between the obstacle and the main body (10) based on the measured first and second angles;

**characterized in that** the method further comprising:

recognizing an angle level of the main body (10) by comparing the measured distance with a set value; determining whether the main body (10) enters the obstacle based on the angle level of the main body (S21), wherein an area including the obstacle is defined as a danger area based on the angle level of the main body (10); and wherein a control unit (900) stores the danger area in a storage unit (800) and changes a traveling direction of the main body (10) to avoid the danger area, upon determining that an area where the detected obstacle is located is the danger area.

9. The method of claim 8, wherein, when the distance between the obstacle and the main body (10) is greater than a first set value, an area including the obstacle is set on the cleaning area as a first travelable area able to be overcome by normal traveling (S22).

10. The method of claim 9, wherein, when the distance between the obstacle and the main body (10) is in a range from the first set value to a second set value less than the first set value, the control unit (900) sets the area including the obstacle on the cleaning area as a second travelable area able to be overcome by rotation traveling (S24).

11. The method of claim 10, wherein, when the distance between the obstacle and the main body (10) is less than the second set value, the control unit (900) sets an area including the obstacle on the cleaning area as the danger area (S25).

**Patentansprüche**

1. Roboterreiniger (1), der Folgendes umfasst:

einen Hauptkörper (10), der eine Antriebseinheit (400) zum Bewegen umfasst; einen Hindernisdetektionssensor (710), der im Hauptkörper (10) vorgesehen ist, um ein Hindernis zu detektieren; einen Winkelmesssensor (720), der konfiguriert ist, einen Winkel des Hauptkörpers (10) in einer Bewegungsrichtung und einen Winkel des Hauptkörpers (10) in einer Richtung, die die Bewegungsrichtung kreuzt, zu messen; eine Speichereinheit (800), die konfiguriert ist, eine Reinigungskarte zu speichern, die auf der Basis eines Gefahrenbereichs erzeugt wird, der einen Bereich umfasst, in dem sich ein Hindernis befindet, und eine Steuereinheit (900), die konfiguriert ist, eine Reinigung auszuführen, so dass sich der Hauptkörper (10) bewegt, wobei der Gefahrenbereich, der auf der Reinigungskarte erzeugt wird, vermieden wird, **dadurch gekennzeichnet, dass** die Steuereinheit (900) konfiguriert ist zum:

Berechnen eines Abstands zwischen dem Hauptkörper (10) und dem Hindernis auf der Basis der zwei Winkel, die durch den Winkelmesssensor (720) gemessen werden,
Erkennen eines Winkelniveaus des Hauptkörpers (10) relativ zum Hindernis unter Verwendung des berechneten Abstands zwischen dem Hauptkörper (10) und dem Hindernis;
Ermitteln, ob sich der Hauptkörper (10) in Bezug auf das Hindernis bewegen kann, auf der Basis des Winkelniveaus des Hauptkörpers (10); und
Festlegen eines Bereichs, der das Hindernis enthält, im Reinigungsbereich als den Gefahrenbereich, wenn ermittelt wird, dass das Hindernis die Bewegung des Hauptkörpers (10) einschränkt.

2. Roboterreiniger (1) nach Anspruch 1, wobei der Gefahrenbereich einen umliegenden Bereich des Bereichs umfasst, in dem sich das Hindernis befindet.

3. Roboterreiniger (1) nach Anspruch 1, wobei der Abstand zwischen dem Hauptkörper (10) und dem Hindernis indirekt proportional zum Winkel des Hauptkörpers (10) relativ zum Hindernis ist.

4. Roboterreiniger (1) nach einem der Ansprüche 1 bis 3, wobei die Steuereinheit (900) einen Bereich, der das Hindernis enthält, im Reinigungsbereich als den Gefahrenbereich festlegt, wenn der Abstand zwischen dem Hauptkörper (10) und dem Hindernis kleiner als ein eingestellter Wert ist, der in der Speichereinheit (800) vorab gespeichert wurde.

5. Roboterreiniger (1) nach einem der Ansprüche 1 bis 4, wobei die Steuereinheit (900) einen Bereich, der das Hindernis enthält, auf der Reinigungskarte als einen ersten befahrbaren Bereich festlegt, der durch eine normale Bewegung bewältigt werden kann, wenn der Abstand zwischen dem Hauptkörper (10) und dem Hindernis größer als ein erster eingestellter Wert ist.

6. Roboterreiniger (1) nach Anspruch 5, wobei die Steuereinheit (900) einen Bereich, der das Hindernis enthält, auf der Reinigungskarte als einen zweiten befahrbaren Bereich festlegt, der durch eine Drehbewegung des Hauptkörpers (10) bewältigt werden kann, wenn der Abstand zwischen dem Hauptkörper (10) und dem Hindernis in einem Bereich vom ersten eingestellten Wert zu einem zweiten eingestellten Wert, der kleiner als der erste eingestellte Wert ist, liegt.

7. Roboterreiniger (1) nach einem der Ansprüche 1 bis 6, wobei die Steuereinheit (900) Richtungsinformationen des Hindernisses relativ zum Hauptkörper (10) auf der Basis von Winkelinformationen jeder Richtung, die durch den Winkelmesssensor (720) gemessen wurden, erfasst.

8. Verfahren zum Steuern eines Roboterreinigers (1), wobei das Verfahren die folgenden Schritte umfasst:

Erzeugen einer Reinigungskarte eines Bereichs, der festgelegt wird, während sich ein Hauptkörper (10) bewegt (S13);
Detektieren eines Hindernisses in einem Vorgang zum Erzeugen der Reinigungskarte (S 15);
wobei sich der Hauptkörper (10) während einer eingestellten Zeit zum Hindernis bewegt und daraufhin stoppt (S19);
und
Messen eines ersten Winkels des Hauptkörpers (10) in einer Bewegungsrichtung und eines zweiten Winkels des Hauptkörpers (10) in einer Richtung, die die Bewegungsrichtung kreuzt, durch eine Winkelmesseinheit, und Berechnen eines Abstands zwischen dem Hindernis und dem Hauptkörper (10) auf der Basis des gemessenen ersten und zweiten Winkels;
**dadurch gekennzeichnet, dass** das Verfahren ferner die folgenden Schritte umfasst:

Erkennen eines Winkelniveaus des Hauptkörpers (10) durch Vergleichen des gemessenen Abstands mit einem eingestellten Wert;
Ermitteln, ob der Hauptkörper (10) in das Hindernis eintritt, auf der Basis des Winkelniveaus des Hauptkörpers (S21),
wobei ein Bereich, der das Hindernis enthält, auf der Basis des Winkelniveaus des Hauptkörpers (10) als ein Gefahrenbereich definiert ist; und
wobei eine Steuereinheit (900) den Gefahrenbereich in einer Speichereinheit (800) speichert und eine Bewegungsrichtung des Hauptkörpers (10) ändert, um den Gefahrenbereich zu vermeiden, wenn festgestellt wird, dass ein Bereich, in dem sich das detektierte Hindernis befindet, der Gefahrenbereich ist.

9. Verfahren nach Anspruch 8, wobei dann, wenn der Abstand zwischen dem Hindernis und dem Hauptkörper (10) größer als ein erster eingestellter Wert ist, ein Bereich, der das Hindernis enthält, im Reinigungsbereich als ein erster befahrbarer Bereich eingestellt wird, der durch eine normale Bewegung (S22) bewältigt werden kann.

10. Verfahren nach Anspruch 9, wobei dann, wenn der Abstand zwischen dem Hindernis und dem Hauptkörper (10) in einem Bereich vom ersten eingestellten Wert bis zu einem zweiten eingestellten Wert, der kleiner als der erste eingestellte Wert ist, liegt, die Steuereinheit (900) den Bereich, der das Hindernis enthält, im Reinigungsbereich als einen zweiten befahrbaren Bereich festlegt, der durch eine Drehbewegung (S24) bewältigt werden kann.

**11.** Verfahren nach Anspruch 10, wobei dann, wenn der Abstand zwischen dem Hindernis und dem Hauptkörper (10) kleiner als der zweite eingestellte Wert ist, die Steuereinheit (900) einen Bereich, der das Hindernis enthält, im Reinigungsbereich als den Gefahrenbereich (S25) einstellt.

## Revendications

**1.** Robot nettoyeur (1) comportant :

un corps principal (10) incluant une unité d'entraînement (400) pour le mouvement ;
un capteur de détection d'obstacle (710) agencé dans le corps principal (10) pour détecter un obstacle ;
un capteur de mesure d'angle (720) configuré pour mesurer un angle du corps principal (10) dans une direction de déplacement et un angle du corps principal (10) dans une direction croisant la direction de déplacement ;
une unité de stockage (800) configurée pour stocker une carte de nettoyage créée sur la base d'une zone de danger incluant une zone où un obstacle est situé ; et
une unité de commande (900) configurée pour effectuer un nettoyage de telle sorte que le corps principal (10) se déplace tout en évitant la zone de danger créée sur la carte de nettoyage,

**caractérisé en ce que** l'unité de commande (900) est configurée pour :

calculer une distance entre le corps principal (10) et l'obstacle sur la base des deux angles mesurés par le capteur de mesure d'angle (720), reconnaître un niveau d'angle du corps principal (10) par rapport à l'obstacle en utilisant la distance calculée entre le corps principal (10) et l'obstacle ;
déterminer si le corps principal (10) peut se déplacer par rapport à l'obstacle, sur la base du niveau d'angle du corps principal (10) ; et
établir une zone incluant l'obstacle sur la zone de nettoyage comme étant la zone de danger, lorsqu'il est déterminé que l'obstacle restreindra le déplacement du corps principal (10).

**2.** Robot nettoyeur (1) selon la revendication 1, dans lequel la zone de danger comporte une zone environnante de la zone où l'obstacle est situé.

**3.** Robot nettoyeur (1) selon la revendication 1, dans lequel la distance entre le corps principal (10) et l'obstacle est inversement proportionnelle à l'angle du corps principal (10) par rapport à l'obstacle.

**4.** Robot nettoyeur (1) selon l'une quelconque des revendications 1 à 3, dans lequel l'unité de commande (900) établit une zone incluant l'obstacle sur la zone de nettoyage comme étant la zone de danger, lorsque la distance entre le corps principal (10) et l'obstacle est inférieure à une valeur établie pré-stockée dans l'unité de stockage (800).

**5.** Robot nettoyeur (1) selon l'une quelconque des revendications 1 à 4, dans lequel l'unité de commande (900) établit une zone incluant l'obstacle sur la carte de nettoyage comme étant une première zone pouvant être parcourue à surmonter par un déplacement normal, lorsque la distance entre le corps principal (10) et l'obstacle est supérieure à une première valeur établie.

**6.** Robot nettoyeur (1) selon la revendication 5, dans lequel l'unité de commande (900) établit une zone incluant l'obstacle sur la carte de nettoyage comme étant une seconde zone pouvant être parcourue à surmonter par un déplacement en rotation du corps principal (10), lorsque la distance entre le corps principal (10) et l'obstacle est dans une plage allant de la première valeur établie à une seconde valeur établie inférieure à la première valeur établie.

**7.** Robot nettoyeur (1) selon l'une quelconque des revendications 1 à 6, dans lequel l'unité de commande (900) acquiert des informations de direction de l'obstacle par rapport au corps principal (10) basées sur des informations d'angle de chaque direction mesurée par le capteur de mesure d'angle (720).

**8.** Procédé de commande d'un robot nettoyeur (1), le procédé comportant les étapes consistant à :

créer une carte nettoyage d'une zone spécifiée pendant qu'un corps principal (10) se déplace (S 13) ;
détecter un obstacle dans un processus de création de la carte de nettoyage (S15) ;
déplacer le corps principal (10) vers l'obstacle pendant un temps réglé puis l'arrêter (S19) ; et
par l'intermédiaire d'une unité de mesure d'angle, mesurer un premier angle du corps principal (10) dans une direction de déplacement et un second angle du corps principal (10) dans une direction croisant la direction de déplacement, et calculer une distance entre l'obstacle et le corps principal (10) sur la base des premier et second angles mesurés ;

**caractérisé en ce que** le procédé comporte en outre les étapes consistant à :

reconnaître un niveau d'angle du corps principal (10) en comparant la distance mesurée avec une valeur établie ;

déterminer si le corps principal (10) entre dans l'obstacle, sur la base du niveau d'angle du corps principal (S21) ; et

dans lequel une zone incluant l'obstacle est définie comme étant une zone de danger sur la base du niveau d'angle du corps principal (10) ; et

dans lequel une unité de commande (900) stocke la zone de danger dans une unité de stockage (800) et change une direction de déplacement du corps principal (10) pour éviter la zone de danger, lorsqu'il est déterminé qu'une zone où l'obstacle détecté est situé est la zone de danger.

9. Procédé selon la revendication 8, dans lequel, lorsque la distance entre l'obstacle et le corps principal (10) est supérieure à une première valeur établie, une zone incluant l'obstacle est établie sur la zone de nettoyage comme étant une première zone pouvant être parcourue à surmonter par un déplacement normal (S22).

10. Procédé selon la revendication 9, dans lequel, lorsque la distance entre l'obstacle et le corps principal (10) est dans une plage allant de la première valeur établie à une seconde valeur établie inférieure à la première valeur établie, l'unité de commande (900) établit la zone incluant l'obstacle sur la zone de nettoyage comme étant une seconde zone pouvant être parcourue à surmonter par un déplacement en rotation (S24).

11. Procédé selon la revendication 10, dans lequel, lorsque la distance entre l'obstacle et le corps principal (10) est inférieure à la seconde valeur établie, l'unité de commande (900) établit une zone incluant l'obstacle sur la zone de nettoyage comme étant la zone de danger (S25).

Fig.1

Fig.2

Fig.3

Fig.4

Fig.5

TRAVELING DIRECTION

TILT DIRECTION

Fig.6

Fig.7

Fig.8

```
                    ┌─────────────┐
                    │    START    │
                    └──────┬──────┘
                           │
    S11                    ▼                          NO
         ◇──────────────────────────────────◇────────┐
          CLEANING START COMMAND?                     │
         ◇──────────────────────────────────◇         │
                           │ YES◄─────────────────────┼──────────┐
    S13                    ▼                          │          │
          ┌────────────────────────────────┐          │          │
          │         START CLEANING         │          │          │
          └────────────────┬───────────────┘          │          │
                           │                          │          │
    S15                    ▼                   NO      │          │
         ◇──────────────────────────────────◇─────────┼─────┐    │
          OBSTACLE DETECTED?                           │     │    │
         ◇──────────────────────────────────◇          │     │    │
                           │ YES                       │     │    │
    S17                    ▼                           │     │    │
  YES    ◇──────────────────────────────────◇          │     │    │
  ┌──────  DANGER AREA?                                 │     │    │
  │      ◇──────────────────────────────────◇          │     │    │
  │                        │ NO                         │     │    │
S18        S19             ▼                            │     │    │
  ▼   ┌────────────┐  ┌────────────────────┐            │     │    │
  │   │TRAVEL AFTER│  │    TRY TO ENTER    │            │     │    │
  │   │ AVOIDANCE  │  └──────────┬─────────┘            │     │    │
  │   └────────────┘             │                      │     │    │
  │                 S21          ▼                 YES   │     │    │
  │        ◇────────────────────────────────◇──────────┼─────┼────┤
  │         MEASURED DISTANCE                           │     │    │
  │         VALUE>FIRST SET VALUE?                      │     │    │
  │        ◇────────────────────────────────◇          │     │    │
  │                        │ NO                         │     │    │
  │        S23             ▼                      YES   │     │    │
  │        ◇────────────────────────────────◇──────┐   │     │    │
  │         MEASURED DISTANCE VALUE                 │   │     │    │
  │         >SECOND SET VALUE?                      │   │     │    │
  │        ◇────────────────────────────────◇       │   │     │    │
  │                        │ NO          S24│    S22 │   │     │    │
  │   S25                  ▼          ┌──────────┐┌──────────┐ │    │
  │   ┌────────────────────────────┐ │ROTATE AND││  ENTER   │ │    │
  │   │    REGISTER DANGER AREA    │ │  ENTER   │└────┬─────┘ │    │
  │   └──────────────┬─────────────┘ │ THRESHOLD│     │      │    │
  │   S27            ▼                └────┬─────┘     │      │    │
  │   ┌────────────────────────────┐      │           │      │    │
  │   │      CHANGE DIRECTION       │      │           │      │    │
  │   └──────────────┬─────────────┘      │           │      │    │
  └──────────────────┤                    │           │      │    │
   S29                ▼◄───────────────────┴───────────┘      │    │
         ◇──────────────────────────────────◇          NO     │    │
          CLEANING COMPLETED?                 ──────────────────────┘
         ◇──────────────────────────────────◇
                           │ YES
                           ▼
                    ┌─────────────┐
                    │     END     │
                    └─────────────┘
```

**EP 3 738 495 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 1020110053767
- US 2009048727 A1